# EUROPEAN PATENT APPLICATION

(11) **EP 4 844 664 A1**
(43) Date of publication of application: **25.11.2026**
(21) Application number: 24918630.5
(22) Date of filing: 10.10.2024
(51) Int. Cl.: G06Q 50/10

(54) **INFORMATION PROCESSING METHOD AND INFORMATION PROCESSING DEVICE**

(30) Priority: 15.01.2024 JP 2024003819
(71) Applicant: Toyo Seikan Group Holdings, Ltd., Shinagawa-ku Tokyo 141-8627 (JP)
(72) Inventor: KUNIMASA, Hidehiko, Tokyo 141-8627 (JP); TANABE, Suguru, Tokyo 141-8627 (JP); OKAMURA, Hiroshi, Tokyo 141-8627 (JP); FURUKAWA, Satoshi, Tokyo 141-8627 (JP); MIKI, Ippei, Tokyo 141-8627 (JP); TAKEUCHI, Yuri, Tokyo 141-8627 (JP)
(74) Representative: Detken, Andreas
(86) International application number: PCT/JP2024/036218
(87) International publication number: WO 2025/154343

(57) **Abstract**

[Abstract] To provide an information processing method that enables effective use of information obtained during distribution of a container.

[Solution] An information processing method manages information related to a series of distribution processes in which a content 12 is contained in a container 11 to which an information storage carrier 110 storing container identification information is attached to distribute as a product. The information processing method includes a receiving step of receiving container identification information of the container 11 to be determined, an executed process identification step of referring to a container management database 210 based on the container identification information received in the receiving step and identifying an executed process on the container 11 to be determined, a required process identification step of identifying a required process on the container 11 to be determined, and a determination step of comparing the executed process with the required process and determining legitimacy of the container 11 to be determined in accordance with a result of the comparison.

## Description

### Technical Field

The present invention relates to an information processing method and an information processing device.

### Background Art

In the related art, as a management method used when a product, which is a container filled with a content, is distributed in a distribution market, it is known that inventory management, sales prediction, marketing, tracing, and the like of the product are performed using a container identification code assigned to the container. For example, Patent Document 1 discloses a technology for managing a product by reading a barcode printed on a container with a barcode reader. In addition, Patent Document 2 discloses a technology for managing a product by reading an IC tag attached to a container with a reader/writer.

### Citation List

### Patent Literature

Patent Document 1: JP 2003-256765 A
Patent Document 2: JP 2018-188199 A

### Summary of Invention

### Technical Problem

Each container to which a container identification code is assigned traces a series of distribution processes called a supply chain, and thus various types of information are accumulated in association with each container. The various types of information associated with each container are used for inventory management, sales prediction, marketing, tracing, and the like of the product as disclosed in Patent Document 1, but there is a demand for further use of information.

The present invention has been made in view of the above problem, and an object of the present invention is to provide an information processing method and an information processing device that enable effective use of information obtained when a container is distributed.

### Solution to Problem

In order to achieve the above object, an information processing method according to an aspect of the present invention is an information processing method executed by a computer for processing information related to a series of distribution processes in which a content is contained in a container to which an information storage carrier storing container identification information is attached to distribute as a product, the method including:
a receiving step of receiving the container identification information stored in the information storage carrier attached to the container to be determined;
an executed process identification step of, based on the container identification information received in the receiving step, referring to a database capable of registering, respectively for the container in association with the container identification information, process information obtained during execution of respective processes included in the series of distribution processes, and identifying an executed process indicating the process that has been executed on the container to be determined;
a required process identification step of identifying a required process indicating the process required to have been executed on the container to be determined; and
a determination step of comparing the executed process identified in the executed process identification step with the required process identified in the required process identification step, and determining legitimacy relating to the container to be determined, in accordance with a result of the comparison.

### Advantageous Effects of Invention

According to the information processing method of an aspect of the present invention, the legitimacy of the container to be determined is determined by the determiner by comparing the executed process that the container to be determined has traced so far in the series of distribution processes with the required process that the container to be determined should originally trace. Therefore, information obtained when the container is distributed can be effectively used.

Problems, configurations, and effects other than those mentioned above will be clarified in the embodiments of the invention, which will be described later.

### Brief Description of Drawings

FIG. 1 is an overall view illustrating an example of a container distribution system 1.
FIG. 2 is an explanatory diagram illustrating an example of each process of a container 11, a content 12, a product 13, and a recycled material 14.
FIG. 3 is a block diagram illustrating an example of an information processing device 2.
FIG. 4 is a functional explanatory diagram illustrating an example of an information collection unit 200 and an information flow.
FIG. 5A is a data configuration diagram illustrating an example of a container management database 210.
FIG. 5B is a data configuration diagram illustrating an example of the container management database 210.
FIG. 6 is a functional explanatory diagram illustrating an example of an information processing unit 201 and an information flow.
FIG. 7 is a hardware configuration diagram illustrating an example of a computer 900.
FIG. 8 is a flowchart illustrating an example of an information collection process of the information collection unit 200.
FIG. 9 is a flowchart illustrating an example of legitimacy determination processing of the information processing unit 201.
FIG. 10 is an explanatory diagram illustrating a first example in a case where a legitimacy determination item is authenticity determination of the content 12.
FIG. 11 is an explanatory diagram illustrating a first example in the case where the legitimacy determination item is authenticity determination of the content 12.
FIG. 12 is an explanatory diagram illustrating a second example in a case where the legitimacy determination item is validity determination of the right generated by purchase of the product 13.
FIG. 13 is an explanatory diagram illustrating a second example in the case where the legitimacy determination item is validity determination of the right generated by purchase of the product 13.
FIG. 14 is an explanatory diagram illustrating a third example in a case where the legitimacy determination item is validity determination of the right generated by recycling of the container 11.
FIG. 15 is an explanatory diagram illustrating a third example in the case where the legitimacy determination item is the validity determination of the right generated by recycling of the container 11.

### Description of Embodiments

Embodiments for implementing the present invention will be described below with reference to the accompanying drawings. In the following, a scope necessary for description for achieving the object of the present invention will be schematically described, and a scope necessary for description of the relevant parts of the present invention will be mainly described, whereas parts whose description is omitted are based on a known technique.

### Configuration of Container Distribution System 1

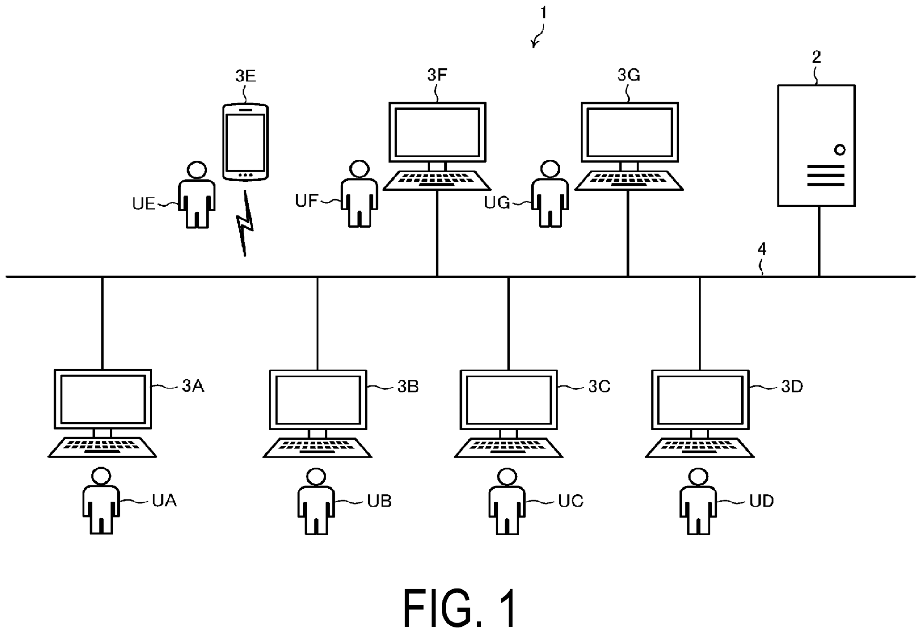

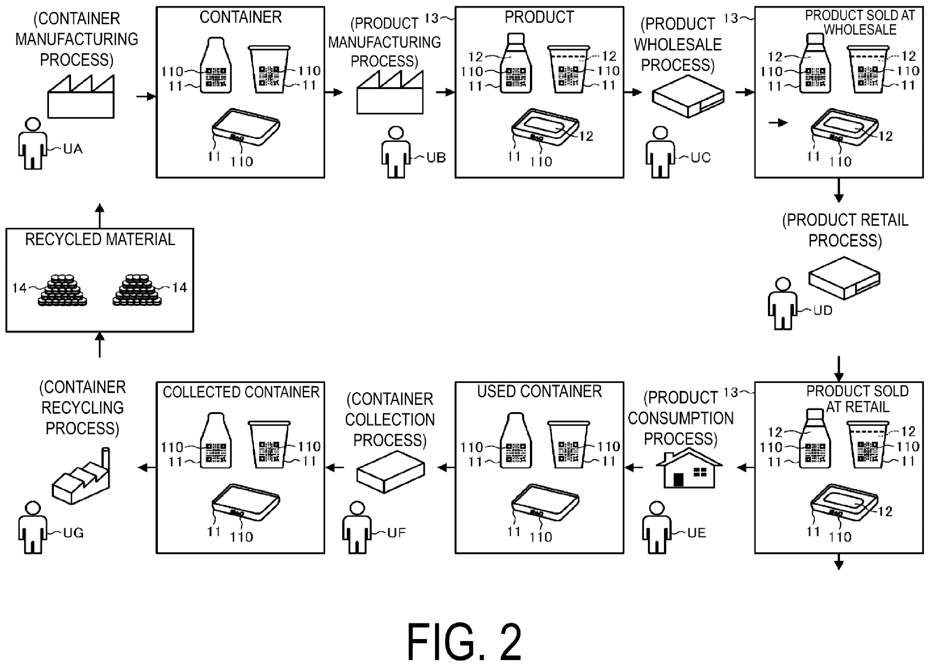

FIG. 1 is an overall view illustrating an example of a container distribution system 1 according to the present embodiment. FIG. 2 is an explanatory diagram illustrating an example of each process of a container 11, a content 12, a product 13, and a recycled material 14.

The container distribution system 1 includes an information processing device 2 as a main component. The information processing device 2 is a device that processes information related to a series of distribution processes in which the content 12 is contained in the container 11 to which an information storage carrier 110 storing container identification information is attached and is distributed as the product 13.

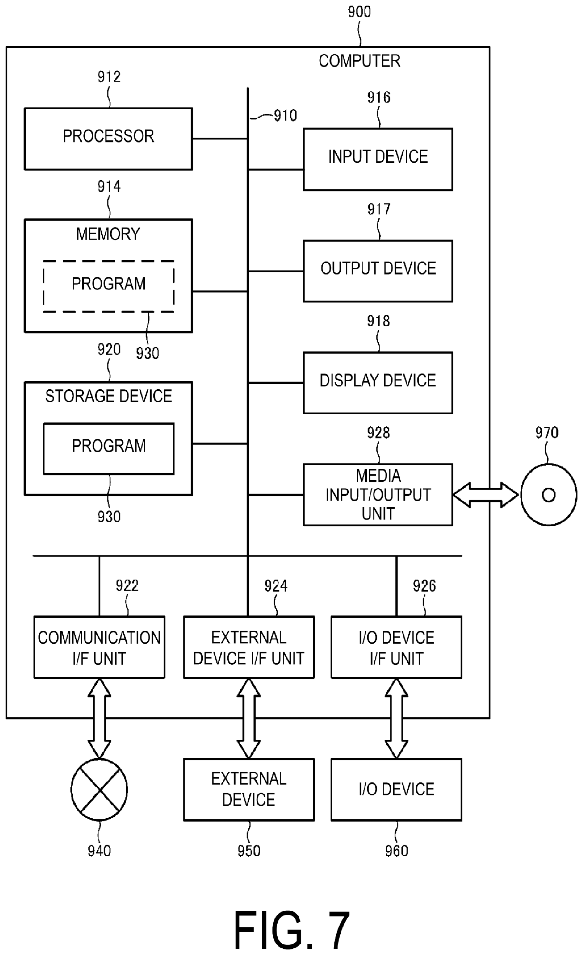

The information processing device 2 is a general-purpose or dedicated computer (see FIG. 7 described later), and is constituted by, for example, a server computer or a cloud computer. A container manufacturer terminal device 3A used by a container manufacturer UA, a product manufacturer terminal device 3B used by a product manufacturer UB, a wholesaler terminal device 3C used by a wholesaler UC, a retailer terminal device 3D used by a retailer UD, a consumer terminal device 3E used by a consumer UE, a collection operator terminal device 3F used by a collection operator UF, and a recycle operator terminal device 3G used by a recycle operator UG are connected to the information processing device 2 via a wired or wireless network 4. Note that the numbers of the terminal devices 3A to 3G and the configuration of the network 4 are not limited to the example illustrated in FIG. 1.

Each of the terminal devices 3A to 3G (container manufacturer terminal device 3A, product manufacturer terminal device 3B, wholesaler terminal device 3C, retailer terminal device 3D, consumer terminal device 3E, collection operator terminal device 3F, and recycle operator terminal device 3G) is a general-purpose or dedicated computer (see FIG. 7 described later), and is constituted by, for example, a stationary computer or a portable computer. Additionally, each of the terminal devices 3A to 3G is installed with a program such as an application or a browser, receives various types of input operations, and outputs various types of information through a display screen or audio output.

The container 11 is manufactured using a raw material such as plastic, metal, glass, or paper, for example, and has any shape or size. Examples of the type of the container 11 include a plastic bottle made of polyethylene terephthalate (PET) and the like, a metal can made of steel, aluminum, and the like, a glass bottle, a paper pack, and a laminating pouch. Note that the container 11 may be manufactured using a recycled material 14 that is recyclable. The container 11 may be a disposable container or a returnable container.

The information storage carrier 110 capable of storing container identification information is attached to the container 11. The container identification information is, for example, a container ID (container identification code) for identifying each of the containers 11. Note that the information storage carrier 110 may include web access information (URL or the like) for accessing various types of information related to the container 11, the content 12, the product 13, or the recycled material 14 via a web service.

The information storage carrier 110 is constituted by a code image such as a one-dimensional code or a two-dimensional code. In this case, a label on which the code image is printed may be embedded in a formed body of the container 11, or may be affixed to or wound around the container 11. In addition, the information storage carrier 110 is constituted by an electronic tag (IC tag) called RFID, or the like. In this case, an electronic tag may be embedded in a formed body of the container 11, or may be affixed to the container 11.

The content 12 is liquid, solid, powder, granules, or the like. Examples of the types of the content 12 (content type) include beverages such as water, juice, and milk, food such as oil, sauces, meat, and fish, daily necessities such as detergent and shampoo, and pharmaceuticals. The content 12 may be at room temperature, chilled (refrigerated), or frozen. In addition, the content 12 may be heated or unheated in the manufacturing process, and may be a fresh product or a processed product in the case of beverages or food.

The product 13 is produced by using the container 11 and accommodating the content 12. Note that as a method of accommodating the content 12, when the container 11 is in the form of a bottle or a cup, the container 11 is filled with the content 12 and sealed with a lid or the like. When the container 11 is in the form of a tray or a pack, the content 12 is contained in the container 11 and sealed with a film or the like.

The recycled material 14 is generated from the container 11 by performing recycle processing including sorting, crushing, washing, deodorizing, dehydration, and pelletizing on the used container 11. The types of the recycled materials 14 (recycled material type) are classified according to the types of the raw materials of the container 11, for example.

The container manufacturer UA manufactures the container 11 from the raw material (including recycled material 14) of the container 11 by a molding device or the like installed in a container factory, and ships the container 11 with the information storage carrier 110 to the product manufacturer UB (container manufacturing process). The product manufacturer UB places the content 12 in the container 11 in a product factory, manufactures the product 13, and ships the product 13 to the wholesaler UC (product manufacturing process). The wholesaler UC stores the product 13 in a warehouse or the like and ships the product 13 to the retailer UD (product wholesale process). The retailer UD sells the product 13 to the consumer UE in a store or the like (product retail process). Examples of the consumer UE include not only general consumers but also business operators and the like.

The consumer UE consumes the content 12 of the purchased product 13 at home, a business facility, or the like (product consumption process), and carries the used container 11 to a collection site such as a store or a public facility. Note that the consumer UE may request the collection operator UF to collect the used container 11.

The collection operator UF collects the used container 11 (container collection process), performs preprocessing such as sorting and selection as necessary, and transports the container 11 to a recycling factory. The recycle operator UG performs recycle processing on the collected container 11 in a recycling factory, and recycles the collected container 11 into the recycled material 14 (container recycling process).

The container 11 is recycled into the recycled material 14 after the product 13 is supplied to the consumer UE and consumed by passing through a series of distribution processes including the above-described processes (container manufacturing process, product manufacturing process, product wholesale process, product retail process, product consumption process, container collection process, and container recycling process). Then, the recycled material 14 is reused as a raw material of a new container 11.

Note that some of the processes included in the series of distribution processes may be omitted, or other processes may be added. For example, the above-described processes are performed when the container 11 is a disposable container, but when the container 11 is a returnable container, a container cleaning process may be added instead of the container recycling process, and the container 11 may be returned to the product manufacturing process. Further, as a sales form of the product 13, the product wholesale process may be omitted, or the product retail process may be omitted.

### Configuration of Information Processing Device 2

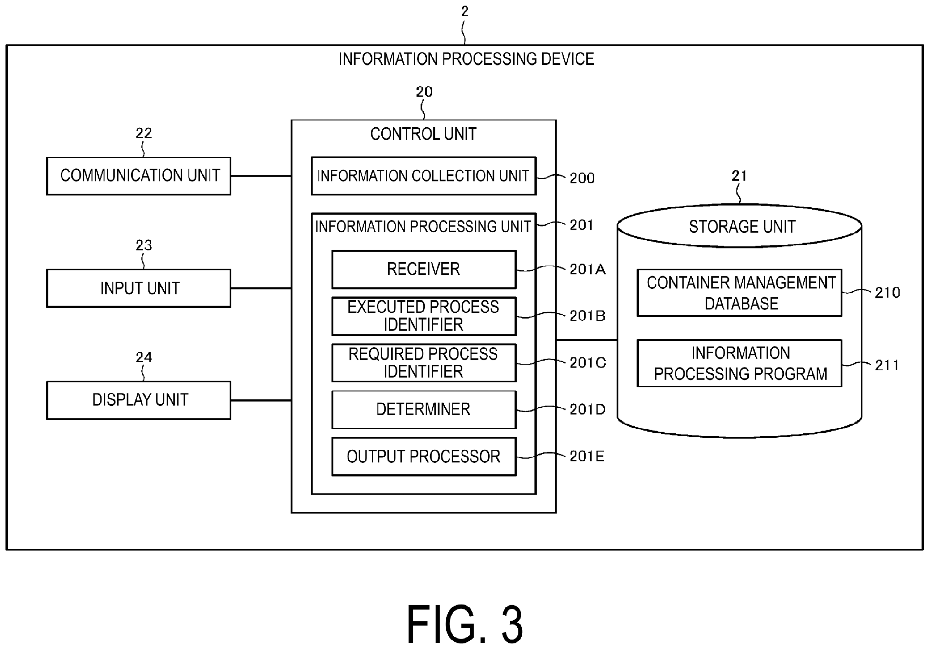

FIG. 3 is a block diagram illustrating an example of the information processing device 2 according to the present embodiment. The information processing device 2 includes a control unit 20 constituted by a processor and the like, a storage unit 21 constituted by an HDD, an SSD, a memory, and the like, a communication unit 22 that is a communication interface with the network 4, an input unit 23 constituted by a keyboard, a mouse, and the like, and a display unit 24 constituted by a display and the like. Note that the input unit 23 and the display unit 24 may be omitted.

The storage unit 21 stores a container management database 210 and an information processing program 211, and also stores an operating system, other programs, data, and the like.

The container management database 210 is a database in which process information D1 regarding execution of each process included in the series of distribution processes can be registered for each container 11 in association with container identification information.

The control unit 20 functions as an information collection unit 200 and an information processing unit 201 by executing the information processing program 211 stored in the storage unit 21. The information processing unit 201 functions as a receiver 201A, an executed process identifier 201B, a required process identifier 201C, a determiner 201D, and an output processor 201E.

### Information Collection Unit 200

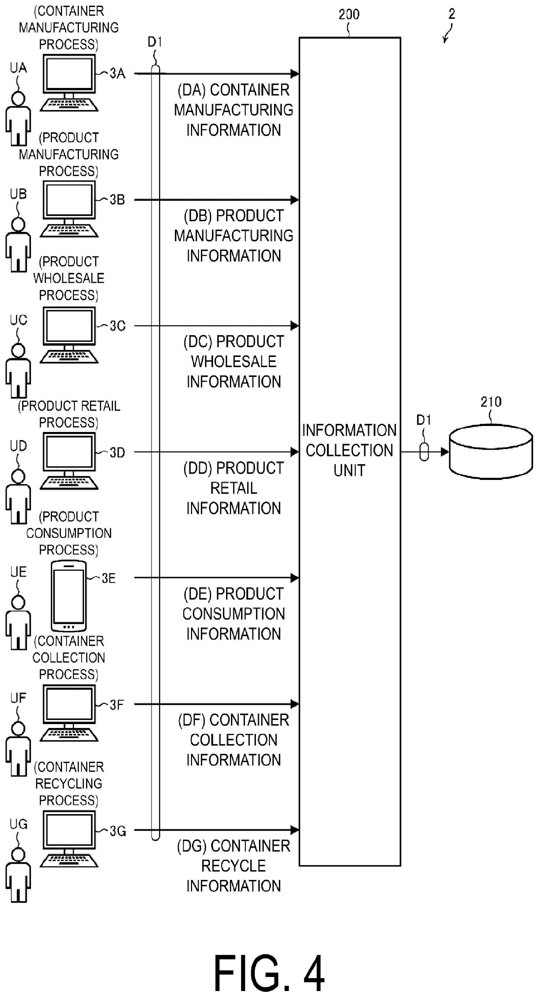

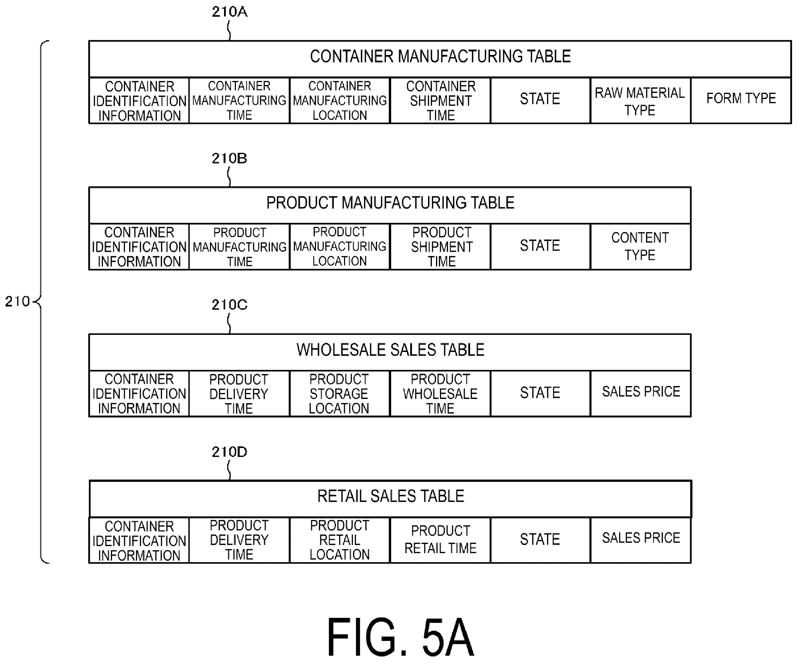

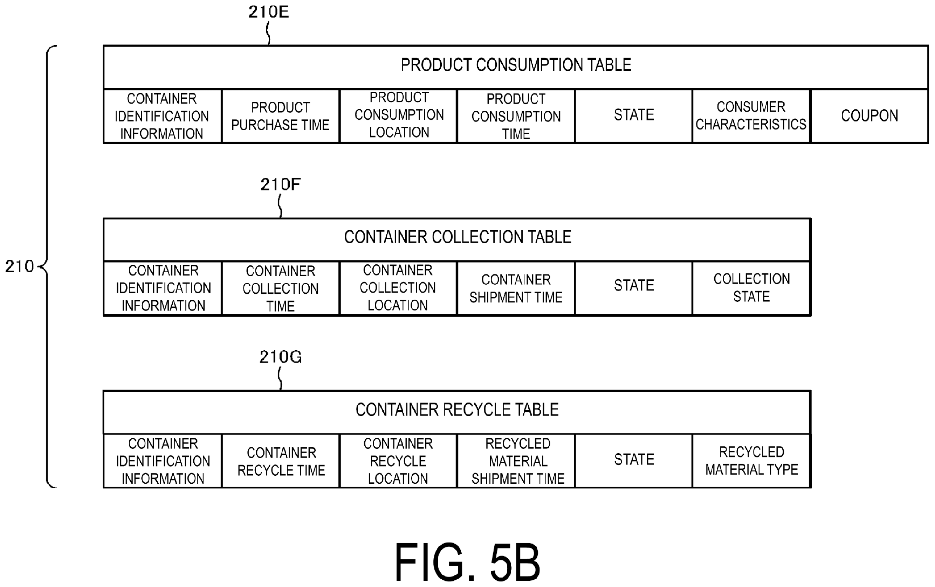

FIG. 4 is a functional explanatory diagram illustrating an example of the information collection unit 200 and an information flow. The control unit 20 of the information processing device 2 implements the information collection unit 200 by mainly using the container management database 210 (see FIGS. 5A and 5B described later). The information collection unit 200 performs information collection processing of collecting the process information D1 related to the container 11, the content 12, the product 13, and the recycled material 14 and registering the process information D1 in the container management database 210.

The process information D1 is information in which data characterizing each process is recorded. The process information D1 includes, as basic information recording data of the process information D1, at least container identification information and information regarding time and location. The process information D1 further includes various types of additional information added in each process.

As information corresponding to each process, the process information D1 is classified into, for example, container manufacturing information DA related to manufacturing of the container 11, product manufacturing information DB related to manufacturing of the product 13 using the container 11, wholesale sales information DC related to wholesale sales of the product 13, retail sales information DD related to retail sales of the product 13, product consumption information DE related to consumption of the product 13, container collection information DF related to collection of the container 11, and container recycle information DG related to recycling of the container 11 into the recycled material 14.

For example, the information collection unit 200 acquires (receives) the process information D1 (to be specific, container manufacturing information DA, product manufacturing information DB, wholesale sales information DC, retail sales information DD, product consumption information DE, container collection information DF, and container recycle information DG) from each terminal device 3A to 3G via the network 4, and registers the process information D1 in the container management database 210.

The process information D1 acquired from each terminal device 3A to 3G is the container identification information, time, location, and state when the information storage carrier 110 attached to the container 11 is read, for example, by a reader (not illustrated), when the container 11 passes each process, and various types of additional information added in each process, all of which are recorded as the process information D1.

Note that the process information D1 may be information in which the input results input in the respective terminal devices 3A to 3G are recorded instead of or in addition to the reading result of the reader. The process information D1 may be acquired in a process different from the processes to which the container manufacturing information DA, the product manufacturing information DB, the wholesale sales information DC, the retail sales information DD, the product consumption information DE, the container collection information DF, and the container recycle information DG correspond. For example, the product manufacturing information DB may be acquired by the container manufacturer UA inputting the product manufacturing information DB at the container manufacturer terminal device 3A, or the product consumption information DE may be acquired by the retailer UDC or the collection operator UF inputting the product consumption information DE at the wholesaler terminal device 3C or the collection operator terminal device 3F.

The reader of container identification information is used in each process, and is installed in each location such as a container factory, a product factory, a warehouse, a store, a collection site, and a recycling factory. The reader may be constituted by a code reader, a camera, an electronic tag reader, or the like, for example, and may be a fixed type or a handy type, or may be a built-in type built in a portable computer (such as a smartphone).

Note that the information collection unit 200 may acquire a part of information managed by an external system (manufacturing management system, transportation management system, sales management system, or the like) as the process information D1 from the external system.

FIGS. 5A and 5B are data configuration diagrams illustrating an example of the container management database 210. The container management database 210 is configured by a plurality of tables 210A to 210G corresponding to the respective processes. Each of the tables 210A to 210G has, as common fields, fields for registering container identification information, time, location, and state, respectively.

In the field of the container identification information, container identification information for identifying one container 11 may be registered, or a plurality of pieces of container identification information for respectively identifying a plurality of containers 11 may be registered. The time field indicates a date and time, and it is possible to register only the date, or to also register hours, minutes, and seconds. The location field indicates a geographical position or a name of location. As the geographical position, for example, an IP address, coordinates such as latitude and longitude, a region or an area such as an administrative district or a mesh district, or the like is registered. In the case of the IP address, a list in which a correspondence relationship between each IP address and each location is recorded may be prepared. As the name of location, for example, the name of a facility such as a container factory, a product factory, a warehouse, a store, a collection site, or a recycling factory is registered. The name of a facility may be associated with the name of a manufacturer or a business operator that manages the facility. In the state field, any one of states before execution (no record), during execution, and after execution of the process is registered. Specifically, for example, a state of any of no record, storage, and shipment, a state of any of no record, storage, and disposal, and the like are registered according to the progress of each process.

A container manufacturing table 210A has a field for registering additional information specific to the container manufacturing information DA in addition to the common fields for registering container identification information, container manufacturing time, container manufacturing location, container shipment time, and state (no record/storage/shipment). The container manufacturing information DA includes, as additional information, information regarding a raw material type indicating a type of a raw material of the container 11 and information regarding a form type indicating the type of form of the container 11.

A product manufacturing table 210B has a field for registering additional information specific to the product manufacturing information DB in addition to the common fields for registering container identification information, product manufacturing time, product manufacturing location, product shipment time, and state (no record/storage/shipment). The product manufacturing information DB includes, as additional information, information regarding a content type indicating the type of the content 12 contained in the container 11.

A wholesale sales table 210C has a field for registering additional information specific to the wholesale sales information DC in addition to the common fields for registering container identification information, product delivery time, product storage location, product wholesale time, and state (no record/storage/shipment). The wholesale sales information DC includes, as additional information, information regarding the sales price of the product 13.

A retail sales table 210D has a field for registering additional information specific to the retail sales information DD in addition to the common fields for registering container identification information, product delivery time, product retail location, product retail time, and state (no record/storage/sales). The retail sales information DD includes, as additional information, information regarding the sales price of the product 13.

A product consumption table 210E has a field for registering additional information specific to the product consumption information DE in addition to the common fields for registering container identification information, product purchase time, product consumption location, product consumption time, and state (no record/storage/disposal). The product consumption information DE includes, as additional information, information regarding consumer characteristics indicating characteristics (age, gender, preference, and the like) of the consumer UE and information regarding distribution of coupons. A coupon is distributed to the consumer terminal device 3E of the consumer UE by accessing a predetermined website on the basis of web access information stored in the information storage carrier 110 of the product 13 purchased by the consumer UE, for example. Accordingly, an incentive for collecting the container 11 can be given to the consumer UE.

A container collection table 210F has a field for registering additional information specific to the container collection information DF in addition to the common fields for registering container identification information, container collection time, container collection location, container shipment time, and state (no record/storage/shipment). The container collection information DF includes, as additional information, information regarding the collection state (sorted or unsorted) of the container 11.

A container recycle table 210G has a field for registering additional information specific to the container recycle information DG in addition to the common fields for registering container identification information, container recycle time, container recycle location, recycled material shipment time, and state (no record/storage/shipment). The container recycle information DG includes, as additional information, information regarding a recycled material type indicating the type of the recycled material 14.

Note that the data configuration of the container management database 210 is not limited to the example described above and may be changed as appropriate. A part of the data described above (such as additional information of tables 210A to 210G) may be omitted, or data other than the data described above may be added. In addition, a part or all of the container management database 210 may be stored in an external device (or a plurality of external devices) that can be connected to the network 4. In this case, the control unit 20 may access the external device via the communication unit 22.

### Information Processing Unit 201

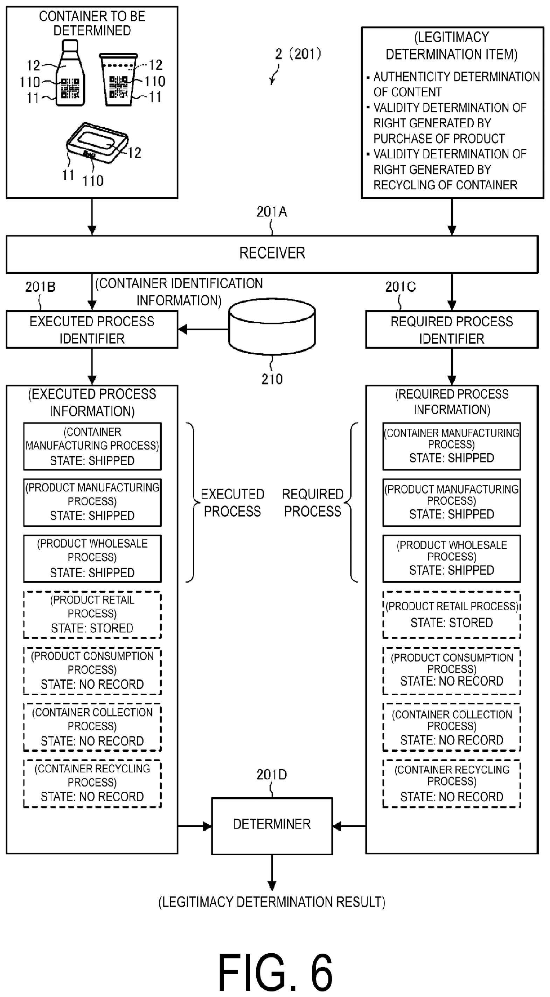

FIG. 6 is a functional explanatory diagram illustrating an example of the information processing unit 201 and an information flow. The control unit 20 of the information processing device 2 implements the information processing unit 201 by using the container management database 210 (see FIGS. 5A and 5B).

The information processing unit 201 refers to the process information D1 registered in the container management database 210, and performs legitimacy determination processing of determining the legitimacy of the container 11 to be determined. As illustrated in FIG. 3, the information processing unit 201 includes, as units for performing the legitimacy determination processing, the receiver 201A, the executed process identifier 201B, the required process identifier 201C, the determiner 201D, and the output processor 201E.

The receiver 201A receives the container identification information stored in the information storage carrier 110 attached to the container 11 to be determined. Note that the receiver 201A may receive, together with the container identification information, a legitimacy determination item determined for the container 11 to be determined.

The executed process identifier 201B refers to the container management database 210 on the basis of the container identification information received by the receiver 201A, and identifies an executed process indicating a process that has been executed on the container 11 to be determined. At this time, the executed process identifier 201B may acquire executed process information including the data (time, location, state, and additional information) recorded when the executed process was executed.

For example, the executed process identifier 201B identifies the executed process or acquires the executed process information by acquiring the process information D1 registered in the container management database 210 in association with the container identification information of the container 11 to be determined. FIG. 6 illustrates a case where the executed processes are the container manufacturing process, the product manufacturing process, and the product wholesale process as indicated by solid lines.

The required process identifier 201C identifies a required process indicating a process required to have been executed on the container 11 to be determined. At this time, the required process identifier 201C may acquire required process information including data (time, location, state, and additional information) recorded when the required process is executed. The required process information does not include data recorded when the required process is actually executed, but includes data to be recorded if the required process is executed. That is, if the required process is executed on the container 11 that is to be determined to have legitimacy, the required process information includes the data to be recorded as the data of the required process at that time.

For example, when the container identification information is acquired, the required process identifier 201C may identify the required process or acquire the required process information based on which of the terminal devices 3A to 3G the container identification information is acquired by. The required process identifier 201C may identify the required process or acquire the required process information according to the location where the container identification information is acquired. In addition, when the legitimacy determination item is received by the receiver 201A, the required process identifier 201C may identify the required process or acquire the required process information on the basis of the legitimacy determination item. Note that the required process and the required process information may be determined in advance by, for example, the container manufacturer UA, the product manufacturer UB, or the like, and may be stored in the storage unit 21. FIG. 6 illustrates a case where the required processes are the container manufacturing process, the product manufacturing process, and the product wholesale process as indicated by solid lines.

The determiner 201D compares the executed process identified by the executed process identifier 201B with the required process identified by the required process identifier 201C, and determines the legitimacy of the container 11 to be determined according to the comparison result. That is, in the legitimacy determination processing, the story (executed process) that the container 11 to be determined has traced so far is compared with the story (required process) that should be originally traced, and when the story that the container 11 to be determined has traced so far matches the story that should be originally traced, the container 11 to be determined is determined to be legitimate. At this time, the content 12 contained in the container 11 and the product 13 manufactured by the container 11 may also be determined to be legitimate. On the other hand, when the story (executed process) that the container 11 to be determined has traced so far does not match the story that should be originally traced, the container 11 to be determined is determined to be not legitimate.

Examples of the determination items for determining the legitimacy of the container 11 to be determined include authenticity determination of the content 12, validity determination of the right generated by purchase of the product 13, and validity determination of the right generated by recycling of the container 11.

In the authenticity determination of the content 12, the determiner 201D determines whether the content 12 contained in the container 11 to be determined is legitimate, depending on whether the executed process includes a required process. If the content 12 is determined to be valid, it means that the content 12 contained in the container 11 to be determined is genuine. If the content 12 is determined to be not legitimate, it means that the content 12 contained in the container 11 to be determined is counterfeit.

In the validity determination of the right generated by the purchase of the product 13, the determiner 201D determines whether the right generated by the purchase of the product 13 in which the content 12 is contained in the container 11 to be determined is legitimate, depending on whether the executed process includes a required process. The right generated by the purchase of the product 13 includes, for example, a right to receive a purchase privilege, a right to apply for a prize competition, and the like. The purchase privilege is, for example, a coupon, points that can be used in a point system, or the like. The application for the purchase privilege and the application for the prize competition are performed by accessing a predetermined website on the basis of web access information stored in the information storage carrier 110, for example. If the product 13 is determined to be valid, it means that the right generated by the purchase of the product 13 is valid. If the product 13 is determined to be not legitimate, it means that the right generated by the purchase of the product 13 is invalid.

In the validity determination of the right generated by the recycling of the container 11, the determiner 201D determines whether the right generated by the recycling of the container 11 to be determined is legitimate according to whether the executed process includes a required process. The right generated by the recycling of the container 11 includes a right to receive a recycling privilege, and the like. The recycling privilege is, for example, a coupon, points that can be used in a point system, or the like. The recycling privilege is introduced, for example, to prompt the consumer UE who has purchased the product 13 to collect the used container 11, and can be received by the consumer UE when the used container 11 is collected. If the container 11 is determined to be valid, it means that the right generated by the recycling of the container 11 is valid. If the container 11 is determined to be not legitimate, it means that the right generated by the recycling of the container 11 to be determined is invalid.

Note that when the required process information is acquired by the executed process identifier 201B and the required process information is acquired by the required process identifier 201C, the determiner 201D may compare the executed process information acquired by the executed process identifier 201B with the required process information identified by the required process identifier 201C, and determine the legitimacy of the container 11 to be determined according to the comparison result. That is, the determiner 201D may determine the legitimacy of the container 11 to be determined depending on whether the executed process information indicating the data (time, location, and the like) recorded when the executed process was executed matches the required process information indicating the data (time, location, and the like) to be recorded if the required process is executed. Therefore, in the legitimacy determination processing in this case, the legitimacy of the container 11 to be determined is determined according to whether the data of the story (executed process information) that the container 11 to be determined has traced so far matches the data of the story (required process information) that should be originally traced.

The output processor 201E performs output processing for outputting the legitimacy determination result obtained by the determiner 201D. For example, the output processor 201E transmits determination result information indicating the legitimacy determination result to the terminal devices 3A to 3G, or registers the determination result information in the container management database 210.

FIG. 7 is a hardware configuration diagram illustrating an example of a computer 900 that constitutes each device. The information processing device 2 and each of the terminal devices 3A to 3G in the container distribution system 1 are each constituted by the computer 900 that is a general-purpose or dedicated computer.

As illustrated in FIG. 7, the computer 900 includes, as main components thereof, a bus 910, a processor 912, a memory 914, an input device 916, an output device 917, a display device 918, a storage device 920, a communication I/F (interface) unit 922, an external device I/F unit 924, an I/O (input/output) device I/F unit 926, and a media input/output unit 928. Note that the above-described components may be omitted as appropriate depending on the application of the computer 900.

The processor 912 is constituted by one or a plurality of arithmetic processing devices (such as central processing unit (CPU), micro-processing unit (MPU), digital signal processor (DSP), and graphics processing unit (GPU)), and operates as a control unit that comprehensively controls the entirety of the computer 900. The memory 914 stores various types of data and a program 930 and is constituted by a volatile memory (such as DRAM and SRAM) that functions as a main memory, a nonvolatile memory (ROM), a flash memory, and the like, for example.

The input device 916 is constituted by, for example, a keyboard, a mouse, a numeric keypad, an electronic pen, or the like, and functions as an input unit. The output device 917 is constituted by, for example, a sound (voice) output device, a vibration device, or the like, and functions as an output unit. The display device 918 is constituted by, for example, a liquid crystal display, an organic EL display, electronic paper, a projector, or the like, and functions as an output unit. The input device 916 and the display device 918 may be integrally formed as a touch panel display. The storage device 920 is constituted by, for example, an HDD, an SSD, or the like, and functions as a storage unit. The storage device 920 stores various types of data required for executing an operating system and the program 930.

The communication I/F unit 922 is connected to a network 940 (which may be the same as the network 4 in FIG. 1) such as the Internet and an intranet, in a wired or wireless manner, and functions as a communication unit that transmits and receives data to and from other computers in accordance with a predetermined communication standard. The external device I/F unit 924 is connected to an external device 950, such as a camera, a printer, a scanner, or a reader/writer, in a wired or wireless manner, and functions as a communication unit that transmits and receives data to and from the external device 950 in accordance with a predetermined communication standard. The I/O device I/F unit 926 is connected to an I/O device 960 such as various sensors and actuators, and functions as a communication unit that transmits and receives, to and from the I/O device 960, data and various signals such as a detection signal of a sensor and a control signal to an actuator, for example. The media input/output unit 928 is constituted by a drive device such as a digital versatile disc (DVD) drive or a compact disc (CD) drive, a memory card slot, or a USB connector, and reads and writes data from and to a medium (non-transitory storage medium) 970 such as a DVD, a CD, a memory card, or a USB memory.

In the computer 900 with the above-described configuration, the processor 912 loads the program 930 stored in the storage device 920 into the memory 914 and executes the loaded program 930 to control each unit of the computer 900 through the bus 910. Note that the program 930 may be stored in the memory 914 instead of the storage device 920. The program 930 may be recorded in the medium 970 in an installable file format or an executable file format, and may be provided to the computer 900 through the media input/output unit 928. The program 930 may be downloaded and provided to the computer 900 via the network 940 through the communication I/F unit 922. In addition, the computer 900 may provide various functions that are implemented by the processor 912 executing the program 930, by using hardware such as a field-programmable gate array (FPGA) or an application specific integrated circuit (ASIC).

The computer 900 is any form of an electronic device, and, for example, is constituted by a stationary computer or a portable computer. The computer 900 may be a client-type computer, a server-type computer, or a cloud-type computer, or may be an embedded computer called a control panel, a controller (including a microcomputer, a programmable logic controller, and a sequencer), or the like.

### Operation of Container Distribution System 1

Hereinafter, as an operation of the container distribution system 1, information collection processing and legitimacy determination processing included in an information processing method executed by the information processing device 2 will be described.

### Information Collection Processing

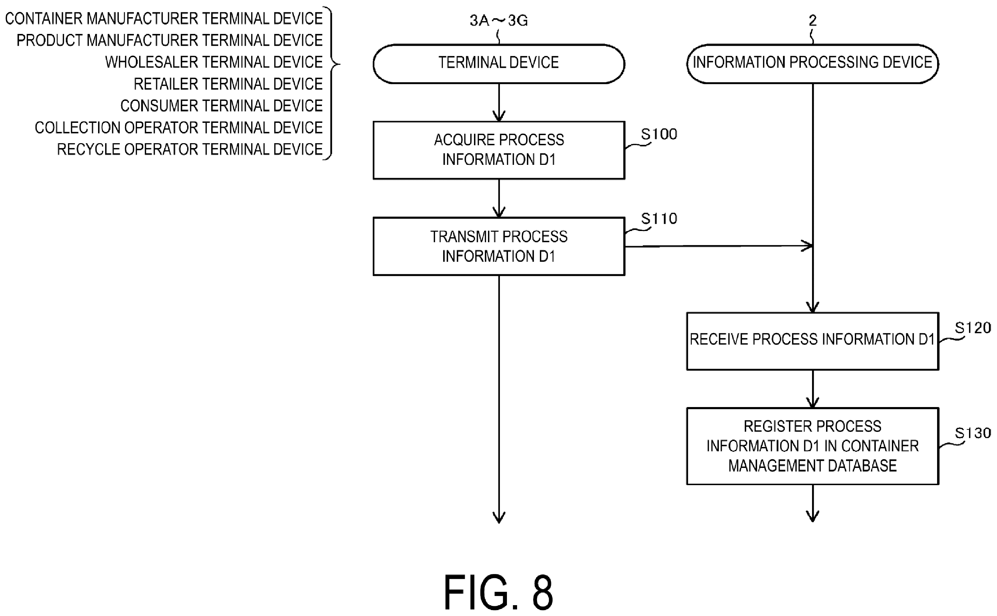

FIG. 8 is a flowchart illustrating an example of information collection process of the information collection unit 200. The information processing device 2 repeatedly performs a series of information collection processes illustrated in FIG. 8 with each of the terminal devices 3A to 3G. The following description will be made mainly on the case of the product manufacturer terminal device 3B.

First, in step S100, each of the terminal devices 3A to 3G acquires the process information D1 on the basis of, for example, a reading result obtained by reading container identification information stored in the information storage carrier 110 attached to the container 11 by a reader and additional information specific to each of the terminal devices 3A to 3G. In a case where the product 13 is manufactured by the product manufacturer UB, for example, the product manufacturer terminal device 3B acquires the product manufacturing information DB including container identification information, product manufacturing time, and product manufacturing location as basic information, and includes the content type of the product 13 as the additional information. Then, in step S110, each of the terminal devices 3A to 3G transmits the process information D1 to the information processing device 2.

Subsequently, in step S120, the information collection unit 200 of the information processing device 2 receives the process information D1 transmitted in step S110. Then, in step S130, the information collection unit 200 registers the process information D1 in the container management database 210. When the information collection unit 200 receives the product manufacturing information DB as the process information D1 from the product manufacturer terminal device 3B, the information collection unit 200 registers the product manufacturing information DB in the product manufacturing table 210B of the container management database 210.

As described above, steps S100 to S130 are repeatedly performed between each of the terminal devices 3A to 3G and the information processing device 2, and thus the process information D1 is collected from each of the terminal devices 3A to 3G by the information collection unit 200 and accumulated in the container management database 210. That is, the story when each of the containers 11 traced each process is accumulated in the container management database 210.

### Legitimacy Determination Processing

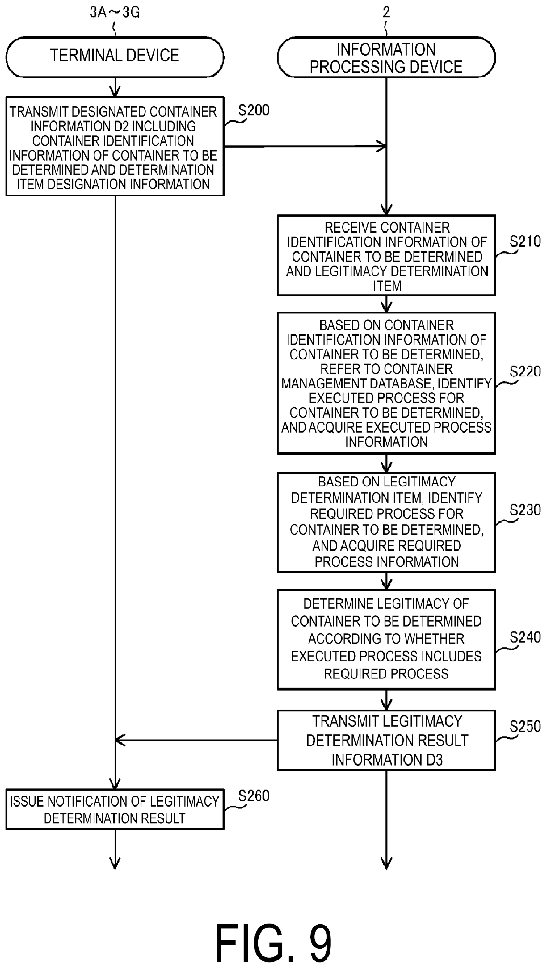

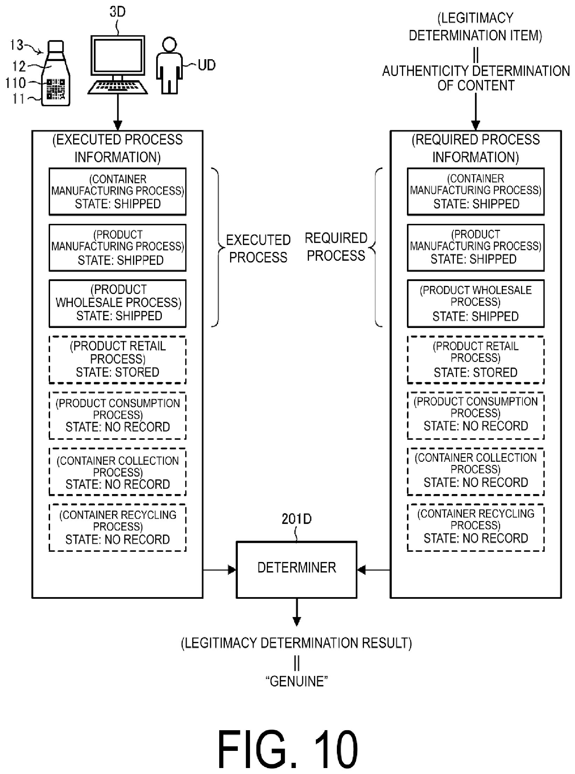

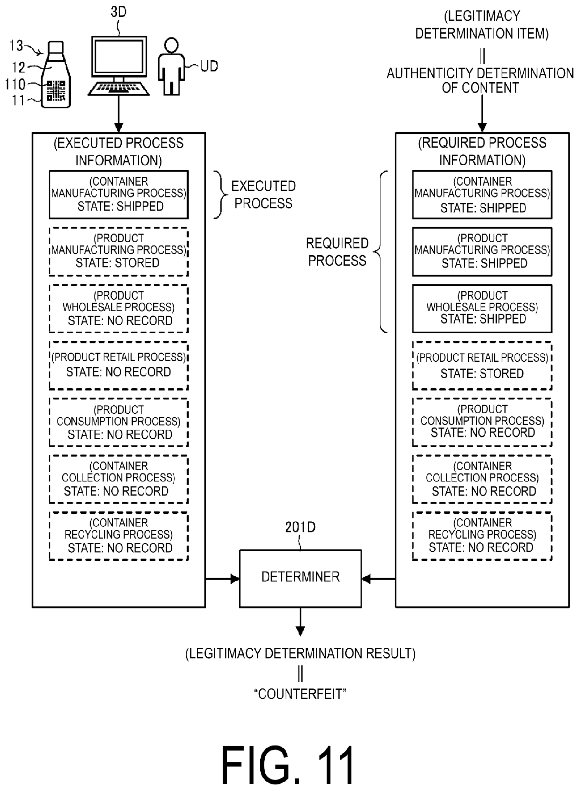

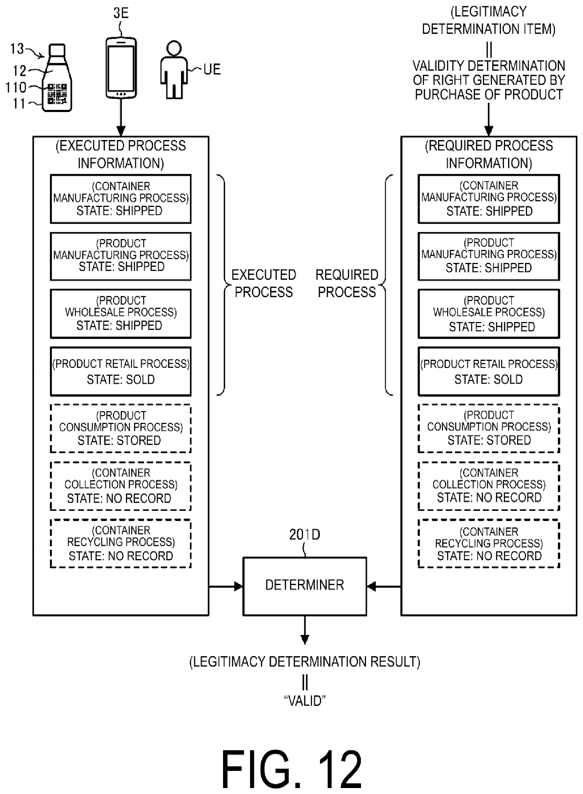

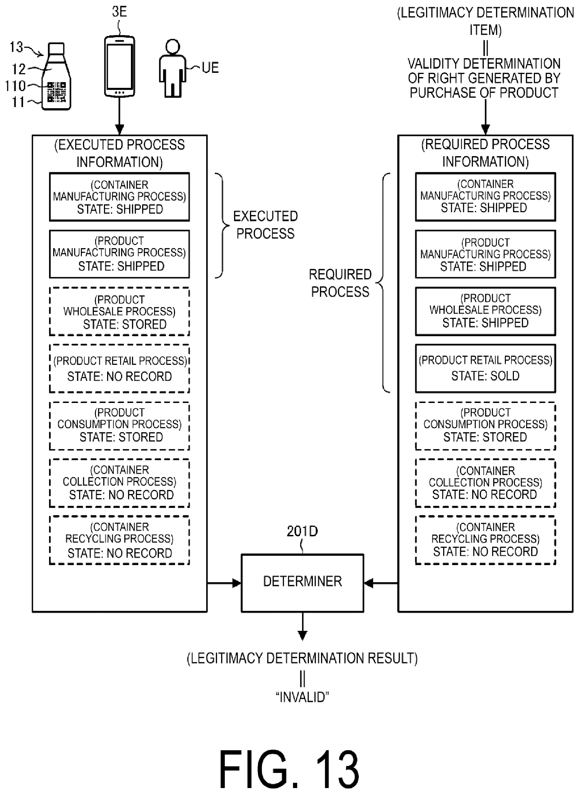

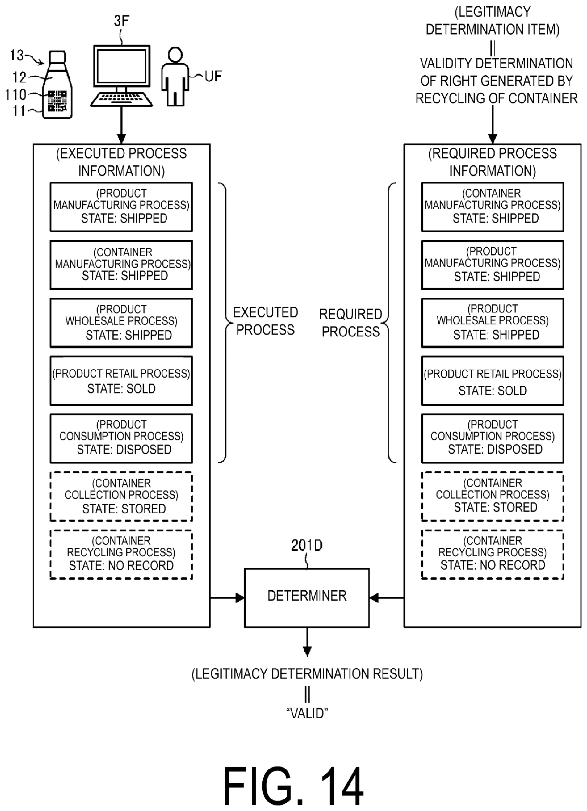

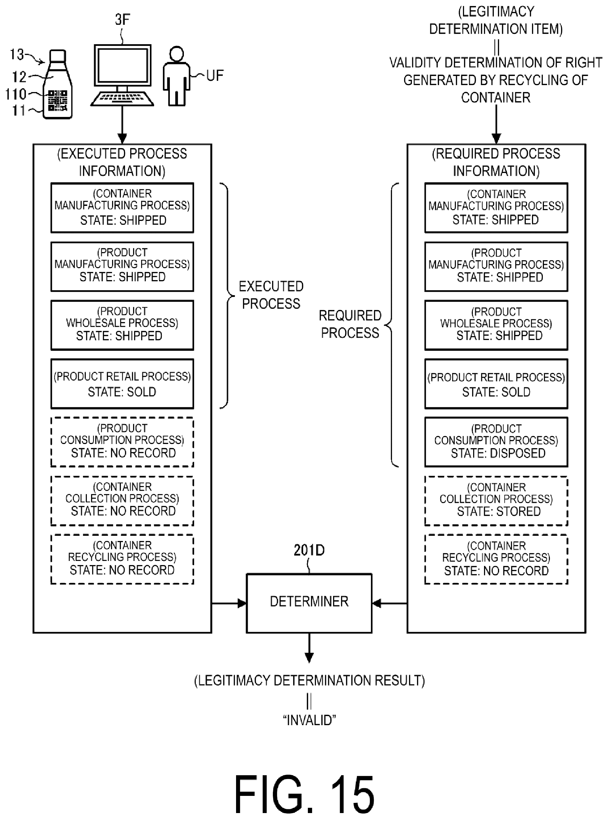

FIG. 9 is a flowchart illustrating an example of legitimacy determination processing of the information processing unit 201. FIGS. 10 and 11 are explanatory diagrams illustrating a first example in a case where the legitimacy determination item is authenticity determination of the content 12. FIGS. 12 and 13 are explanatory diagrams illustrating a second example in a case where the legitimacy determination item is validity determination of the right generated by purchase of the product 13. FIGS. 14 and 15 are explanatory diagrams illustrating a third example in a case where the legitimacy determination item is the validity determination of the right generated by recycling of the container 11.

First, in step S200, the terminal devices 3A to 3G transmit the reading result obtained by reading the container identification information stored in the information storage carrier 110 attached to the container 11 to be determined with the reader to the information processing device 2 as determined container information D2. Here, the first to third examples will be described for a case where the determined container information D2 includes determination item designation information for designating a legitimacy determination item for the container 11 to be determined.

In the first example, the retailer terminal device 3D used by the retailer UD transmits the determined container information D2. At this time, the determined container information D2 includes a reading result of the container identification information by the retailer terminal device 3D and determination item designation information for designating authenticity determination of the content 12 of the product 13 when the retailer UD attempts to purchase the product 13.

In the second example, the consumer terminal device 3E used by the consumer UE transmits the determined container information D2. At this time, the determined container information D2 includes the reading result of the container identification information by the consumer terminal device 3E and determination item designation information for designating the validity determination of the right generated by the purchase of the product 13 when the consumer UE tries to apply for a sales privilege of the product 13 or apply for a prize competition.

In the third example, the collection operator terminal device 3F used by the collection operator UF transmits the determined container information D2. At this time, the determined container information D2 includes the reading result of the container identification information by the collection operator terminal device 3F and determination item designation information for designating the validity determination of the right generated by the recycling of the container 11 when the collection operator UF intends to give a recycling privilege of the container 11.

Next, in step S210 (receiving step), the receiver 201A receives the determined container information D2 transmitted in step S200, and thereby receives the reading result of the container identification information included in the determined container information D2 as the container identification information of the container 11 to be determined. The receiver 201A receives the determination item designated by the determination item designation information included in the determined container information D2 as the legitimacy determination item for the container 11 to be determined.

Next, in step S220 (executed process identification step), the executed process identifier 201B refers to the container management database 210 on the basis of the container identification information received in step S210, and identifies an executed process indicating a process that has been executed on the container 11 to be determined. Here, the executed process identifier 201B acquires the process information D1 registered in the container management database 210 in association with the container identification information received in step S210. Accordingly, the executed process identifier 201B acquires executed process information including the data (time, location, state, and additional information) recorded when the executed process was executed on the container 11 to be determined. Note that in FIGS. 10 to 15, the executed processes are indicated by solid lines, and only the states of the respective processes are illustrated.

Next, in step S230 (required process identification step), the required process identifier 201C identifies a required process indicating a process required to have been executed on the container 11 to be determined. Here, the required process identifier 201C identifies the required process on the basis of the legitimacy determination item received in step S210, and acquires the required process information including the data recorded when the required process is executed. Note that in FIGS. 10 to 15, required processes are indicated by solid lines, and only the states of the respective processes are illustrated.

In the first example, since the legitimacy determination item is the authenticity determination of the content 12, the required process identifier 201C identifies, for example, the container manufacturing process, the product manufacturing process, and the product wholesale process as required processes. The required process identifier 201C acquires, as the required process information, for example, information indicating that the state of the container manufacturing process, the state of the product manufacturing process, and the state of the product wholesale process are "shipped". Note that the required process only needs to include at least the product manufacturing process, and the required process information only needs to include at least the state in the product manufacturing process.

In the second example, since the legitimacy determination item is the validity determination of the right generated by the purchase of the product 13, the required process identifier 201C identifies, for example, the container manufacturing process, the product manufacturing process, the product wholesale process, and the product retail process as required processes. The required process identifier 201C acquires, as the required process information, for example, information indicating that the state of the container manufacturing process, the state of the product manufacturing process, and the state of the product wholesale process are "shipped" or "sold". Note that the required process only needs to include at least the product retail process, and the required process information only needs to include at least the state in the product retail process.

In the third example, since the legitimacy determination item is the validity determination of the right generated by the recycling of the container 11, the required process identifier 201C identifies, for example, the container manufacturing process, the product manufacturing process, the product wholesale process, the product retail process, and the product consumption process as required processes. The required process identifier 201C acquires, as the required process information, for example, the state of the container manufacturing process, the state of the product manufacturing process, the state of the product wholesale process, the state of the product retail process, and the state of the product consumption process as "shipped", "sold", or "disposed". Note that the required process only needs to include at least the product retail process, and the required process information only needs to include at least the state of the product retail process.

Next, in step S240 (determination step), the determiner 201D determines the legitimacy of the container 11 to be determined, depending on whether the executed process identified by the executed process identifier 201B includes the required process identified by the required process identifier 201C.

In the first example, the determiner 201D determines whether the content 12 contained in the container 11 to be determined is legitimate according to whether the executed process includes the container manufacturing process, the product manufacturing process, and the product wholesale process as required processes. FIG. 10 illustrates a case where the determination result is legitimate (the content 12 is genuine), and FIG. 11 illustrates a case where the determination result is not legitimate (the content 12 is counterfeit). Accordingly, in a case where the retailer UD attempts to purchase the product 13, for example, when the product manufacturing process or the product wholesale process has not been executed, the content 12 is determined to be counterfeit, and thus, it is possible to prevent the distribution of a counterfeit product in which the content 12 contained in the container 11 is replaced.

In the second example, the determiner 201D determines whether the right generated by the purchase of the product 13 is legitimate by the container 11 to be determined according to whether the executed process includes the container manufacturing process, the product manufacturing process, the product wholesale process, and the product retail process as required processes. FIG. 12 illustrates a case where the determination result is legitimate (the right is valid), and FIG. 13 illustrates a case where the determination result is not legitimate (the right is invalid). Thus, for example, when an application for a sales privilege of the product 13 or an application for a prize competition is attempted even though the product wholesale process or the product retail process has not been executed, the right generated by the purchase of the product 13 is determined to be invalid, and thus it is possible to prevent an unauthorized application for a sales privilege or an unauthorized application for a prize competition.

In the third example, the determiner 201D determines whether the right generated by recycling of the container 11 when the container 11 to be determined is brought to the collection site is legitimate, according to whether the executed processes include the container manufacturing process, the product manufacturing process, the product wholesale process, the product retail process, and the product consumption process as required processes. FIG. 14 illustrates a case where the determination result is legitimate (the right is valid), and FIG. 15 illustrates a case where the determination result is not legitimate (the right is invalid). Thus, in a case where the collection operator terminal device 3F intends to give the recycling privilege of the container 11, for example, when the product consumption process has not been executed, the right generated by the recycling of the container 11 is determined to be invalid, and therefore, it is possible to prevent the recycling privilege from being fraudulently received.

Note that in a case where the executed process identifier 201B acquires the executed process information in step S220 and the required process identifier 201C acquires the required process information in step S230, the determiner 201D may compare the executed process information acquired by the executed process identifier 201B with the required process information acquired by the required process identifier 201C and determine the legitimacy of the container 11 to be determined according to the comparison result in step S240.

For example, the determiner 201D sets the location included in the required process information as a location condition regarding the location where the required process is executed, and determines the legitimacy according to whether the location included in the executed process information satisfies the location condition. For example, in the first example, by setting the fact that the product storage location of the product wholesale process executed last in the required process information is, for example, the warehouse of the wholesaler UC as the location condition, the legitimacy may be determined according to whether the process executed last in the executed process information is the product wholesale process and the product storage location of the product wholesale process is the warehouse of the wholesaler UC.

The determiner 201D sets the time included in the required process information as a time limit condition related to a time limit for executing the required process, and determines the legitimacy according to whether the time included in the executed process information satisfies the time limit condition. For example, in the second example, by setting the fact that the period from the product delivery time to the product retail time of the product retail process executed last in the required process information is within the retail sale time limit of the product 13 as the time limit condition, for example, the legitimacy may be determined according to whether the process executed last in the executed process information is the product retail process and the period from the product delivery time to the product retail time of the product retail process is within the retail sale time limit of the product 13.

Next, in step S250 (output processing step), the output processor 201E transmits determination result information D3 indicating the determination result determined in step S240 to the terminal devices 3A to 3G that are the transmission source of the determined container information D2 received in step S210.

Then, in step S260, when the terminal devices 3A to 3G receive the determination result information D3 transmitted in step S250, the terminal devices 3A to 3G display the determination result of legitimacy indicated by the determination result information D3. In the first example, whether the content 12 is genuine or counterfeit is displayed according to the determination result. In the second example, whether the right generated by the purchase of the product 13 is valid or invalid is displayed according to the determination result. In the third example, whether the right generated by the recycling of the container 11 is valid or invalid is displayed according to the determination result.

As described above, according to the information processing device 2 of the present embodiment and the information processing processes performed by the information processing device 2, the determiner 201D (determination step) compares the story (executed process) that the container 11 to be determined has traced so far in the series of distribution processes with the story (required process) that should be originally traced, thereby determining the legitimacy of the container 11 to be determined. Therefore, information obtained when the container 11 is distributed can be effectively used.

### Other Embodiments

The present invention is not restricted to the embodiments described above, but can be implemented with various changes without departing from the scope and spirit of the present invention. All of them are included in the technical concept of the present invention.

In the embodiments described above, the information collection unit 200 and the information processing unit 201 included in the information processing device 2 have been described as being implemented by one device. However, the information collection unit 200 and the information processing unit 201 may be distributed among a plurality of devices (computers) to be implemented by the plurality of devices. In this case, each of the information collection unit 200 and the information processing unit 201 may be implemented by a single device, or at least one of the information collection unit 200 and the information processing unit 201 may be implemented by a plurality of devices.

In the embodiments described above, the case where the information processing device 2 operates in accordance with the flowcharts illustrated in FIGS. 8 and 9 has been described, but a part of each process (each unit) may be omitted, or another process may be added. In this case, each omitted process (each omitted unit) may be executed by an external system (manufacturing management system, transport management system, sales management system, data analysis system, or the like).

Aspects of the present disclosure will be collectively described in the following supplementary notes.

### Supplementary Note 1

An information processing method executed by a computer for processing information related to a series of distribution processes in which a content is contained in a container to which an information storage carrier storing container identification information is attached to distribute as a product, the method including:
a receiving step of receiving the container identification information stored in the information storage carrier attached to the container to be determined;
an executed process identification step of, based on the container identification information received in the receiving step, referring to a database capable of registering, respectively for the container in association with the container identification information, process information obtained during execution of respective processes included in the series of distribution processes, and identifying an executed process indicating the process that has been executed on the container to be determined;
a required process identification step of identifying a required process indicating the process required to have been executed on the container to be determined; and
a determination step of comparing the executed process identified in the executed process identification step with the required process identified in the required process identification step, and determining legitimacy relating to the container to be determined, in accordance with a result of the comparison.

### Supplementary Note 2

The information processing method according to Supplementary Note 1, wherein the determination step includes determining whether the content contained in the container to be determined is legitimate, in accordance with whether the executed process includes the required process.

### Supplementary Note 3

The information processing method according to Supplementary Note 1 or 2, wherein the determination step includes determining whether a right generated by purchase of the product which is the container to be determined filled with the content is legitimate, in accordance with whether the executed process includes the required process.

### Supplementary Note 4

The information processing method according to any one of Supplementary Notes 1 to 3, wherein the determination step includes determining whether a right generated by recycling of the container to be determined is legitimate, in accordance with whether the executed process includes the required process.

### Supplementary Note 5

The information processing method according to any one of Supplementary Notes 1 to 4, in which
the receiving step includes receiving, together with the container identification information, a determination item for determining the legitimacy of the container to be determined, and
the required process identification step includes identifying the required process based on the determination item received in the receiving step.

### Supplementary Note 6

The information processing method according to any one of Supplementary Notes 1 to 5, wherein
the process information is information in which data characterizing each of the processes is recorded,
the executed process identification step includes acquiring executed process information including the data recorded during execution of the executed process,
the required process identification step includes acquiring required process information including the data recorded during execution of the required process, and
the determination step includes comparing the executed process information with the required process information, and determining the legitimacy in accordance with a result of the comparison.

### Supplementary Note 7

The information processing method according to any one of Supplementary Notes 1 to 6, wherein
the process information is information in which a location is recorded as the data,
the executed process identification step includes acquiring executed process information including the location recorded during execution of the executed process,
the required process identification step includes acquiring required process information including the location recorded during execution of the required process, and
the determination step includes setting the location included in the required process information as a location condition regarding a location where the required process is executed, and determining the legitimacy in accordance with whether the location included in the executed process information satisfies the location condition.

### Supplementary Note 8

The information processing method according to any one of Supplementary Notes 1 to 7, wherein
the process information is information in which a time is recorded as the data,
the executed process identification step includes acquiring executed process information including the time recorded during execution of the executed process,
the required process identification step includes acquiring required process information including the time recorded during execution of the required process, and
the determination step includes setting the time included in the required process information as a time limit condition regarding a time limit for executing the required process, and determining the legitimacy in accordance with whether the time included in the executed process information satisfies the time limit condition.

### Reference Signs List

1 ... Container distribution system, 2 ... Information processing device, 3A ... Container manufacturer terminal device,
3B ... Product manufacturer terminal device, 3C ... Wholesaler terminal device,
3D ... Retailer terminal device, 3E ... Consumer terminal device,
3F ... Collection operator terminal device, 3G ... Recycle operator terminal device, 4 ... Network,
11 ... Container, 12 ... Content, 13 ... Product, 14 ... Recycled material,
20 ... Control unit, 21 ... Storage unit, 22 ... Communication unit, 23 ... Input unit, 24 ... Display unit,
200 ... Information collection unit, 201 ... Information processing unit, 201A ... Receiver,
201B ... Executed process identifier, 201C ... Required process identifier, 201D ... Determiner,
201E ... Output processor, 210 ... Container management database,
211 ... Information processing program

## Claims

1. An information processing method executed by a computer for processing information related to a series of distribution processes in which a content is contained in a container to which an information storage carrier storing container identification information is attached to distribute as a product, the method comprising:
a receiving step of receiving the container identification information stored in the information storage carrier attached to the container to be determined;
an executed process identification step of, based on the container identification information received in the receiving step, referring to a database capable of registering, respectively for the container in association with the container identification information, process information obtained during execution of respective processes included in the series of distribution processes, and identifying an executed process indicating the process that has been executed on the container to be determined;
a required process identification step of identifying a required process indicating the process required to have been executed on the container to be determined; and
a determination step of comparing the executed process identified in the executed process identification step with the required process identified in the required process identification step, and determining legitimacy relating to the container to be determined, in accordance with a result of the comparison.

2. The information processing method according to claim 1, wherein the determination step includes determining whether the content contained in the container to be determined is legitimate, in accordance with whether the executed process includes the required process.

3. The information processing method according to claim 1, wherein the determination step includes determining whether a right generated by purchase of the product which is the container to be determined filled with the content is legitimate, in accordance with whether the executed process includes the required process.

4. The information processing method according to claim 1, wherein the determination step includes determining whether a right generated by recycling of the container to be determined is legitimate, in accordance with whether the executed process includes the required process.

5. The information processing method according to claim 1, wherein
the receiving step includes receiving, together with the container identification information, a determination item for determining the legitimacy of the container to be determined, and
the required process identification step includes identifying the required process based on the determination item received in the receiving step.

6. The information processing method according to any one of claims 1 to 5, wherein
the process information is information in which data characterizing each of the processes is recorded,
the executed process identification step includes acquiring executed process information including the data recorded during execution of the executed process,
the required process identification step includes acquiring required process information including the data recorded during execution of the required process, and
the determination step includes comparing the executed process information with the required process information, and determining the legitimacy in accordance with a result of the comparison.

7. The information processing method according to claim 6, wherein
the process information is information in which a location is recorded as the data,
the executed process identification step includes acquiring executed process information including the location recorded during execution of the executed process,
the required process identification step includes acquiring required process information including the location recorded during execution of the required process, and
the determination step includes setting the location included in the required process information as a location condition regarding a location where the required process is executed, and determining the legitimacy in accordance with whether the location included in the executed process information satisfies the location condition.

8. The information processing method according to claim 6, wherein
the process information is information in which a time is recorded as the data,
the executed process identification step includes acquiring executed process information including the time recorded during execution of the executed process,
the required process identification step includes acquiring required process information including the time recorded during execution of the required process, and
the determination step includes setting the time included in the required process information as a time limit condition regarding a time limit for executing the required process, and determining the legitimacy in accordance with whether the time included in the executed process information satisfies the time limit condition.

9. An information processing device configured to process information related to a series of distribution processes in which a content is contained in a container to which an information storage carrier storing container identification information is attached to distribute as a product, the information processing device comprising:
a receiver configured to receive the container identification information stored in the information storage carrier attached to the container to be determined;
an executed process identifier configured to, based on the container identification information received by the receiver, refer to a database capable of registering, respectively for the container in association with the container identification information, process information obtained during execution of respective processes included in the series of distribution processes, and identify an executed process indicating the process that has been executed on the container to be determined;
a required process identifier configured to identify a required process indicating the process required to have been executed on the container to be determined; and
a determiner configured to compare the executed process identified by the executed process identifier with the required process identified by the required process identifier, and determine legitimacy relating to the container to be determined in accordance with a result of the comparison.
